# EUROPÄISCHE PATENTSCHRIFT

(11) **EP 3 599 226 B1**
(45) Veröffentlichungstag und Bekanntmachung des Hinweises auf die Patenterteilung: **05.01.2022**
(21) Anmeldenummer: 19187724.0
(22) Anmeldetag: 23.07.2019
(51) Int. Cl.: C02F 9/00, B01D 61/02, B01D 61/42, C02F 1/44, C02F 1/469, C02F 1/68, B01D 61/58, B01D 61/48, B01D 61/44, A23L 2/52, C02F 1/20, C02F 1/66, C02F 1/32, B01D 61/04, B01D 61/14

(54) **VERFAHREN UND VORRICHTUNG ZUR ANREICHERUNG VON SILIKAT IN TRINKWASSER**
METHOD AND DEVICE FOR ENRICHING SILICATE IN DRINKING WATER
PROCÉDÉ ET DISPOSITIF D'ENRICHISSEMENT DE SILICATE DANS L'EAU POTABLE

(30) Priorität: 23.07.2018 DE 102018005796
(43) Veröffentlichungstag der Anmeldung: 29.01.2020
(73) Patentinhaber: KRONES AG, 93073 Neutraubling (DE)
(72) Erfinder: SCHEU, Dirk, 93073 Neutraubling (DE)
(74) Vertreter: Grünecker Patent- und Rechtsanwälte PartG mbB

(56) Entgegenhaltungen:
- EP-A1- 3 483 124
- WO-A1-2004/112515
- JP-A- H0 884 992
- KR-A- 20120 115 873
- US-A1- 2011 064 824

## Beschreibung

Die Erfindung betrifft ein Verfahren zur Anreicherung von Silikat in Trinkwasser, sowie eine Vorrichtung zur Herstellung eines mit Silikat angereicherten Trinkwassers.

### Stand der Technik

Vor dem Hintergrund des steigenden Trinkwasserverbrauchs, der unter anderem in Verbindung mit sinkender Wasserqualität einhergeht, ist es heutzutage bei der Herstellung von Trinkwasser üblich und vielfach nötig, verschiedene Reinigungsschritte für die Aufbereitung von Rohwasser einzusetzen. Insbesondere ist es üblich, in Flaschen abgefülltes Trinkwasser durch Demineralisieren von Rohwasser z.B. mittels Umkehrosmose und anschließender Zugabe von Mineralstoffen herzustellen. Dabei erfolgt die Einstellung des pH-Werts oft durch Zugabe von Laugen oder Säuren bei der Mineralisierung oder vor der Umkehrosmose.

Dies hat den Vorteil, dass eine gleichbleibende Trinkwasserqualität auch bei Einsatz von unterschiedlichem Rohwasser gewährleistet werden kann. Weiter ist es dadurch möglich, verschiedenste Zusätze wie Mineralstoffe, die gesundheitsförderliche Eigenschaften besitzen, gezielt im Trinkwasser anzureichern. Die Hauptmineralbestandteile im Wasser sind Calcium, Magnesium, Natrium, Kalium, Bicarbonat, Sulfat, Chlorid, Nitrat, Fluorid und Silikat, die aus verschiedenen Gründen positive Auswirkungen auf den menschlichen Körper besitzen. So wird z.B. Calcium im menschlichen Körper für die Knochenbildung benötigt. Insbesondere besitzt das Element Silizium, das im Trinkwasser vornehmlich in der Form in von Silikat vorliegt, diverse positive Eigenschaften auf den menschlichen Körper, so dass es vorteilhaft ist, Silikate über das Trinkwasser aufzunehmen. Zum Beispiel ist bekannt, dass Silikate in der Lage sind, toxisches Aluminium zu binden, und so neurodegenerative Krankheiten wie z.B. Alzheimer zu verhindern bzw. zu lindern (V. Rondeau, American Journal of Epidemiology, 169, 4, 2009, Seiten 489-496; Exley et al., Journal of Alzheimer's Disease, 10, 2006, Seiten 17-24).

Diese üblichen Verfahren, bei denen Mineralstoffe demineralisiertem Rohwasser, das z.B. unter Verwendung eines über Umkehrosmose hergestellten Permeats hergestellt, zugegeben werden, sind aber aus Kostengesichtspunkten ungünstig, insbesondere da ein nicht unerheblicher Anteil des Rohwassers (nämlich das bei der Umkerosmose anfallende Retentat) verworfen wird. Weiter ist es oft schwierig, den natürlichen sensorischen Charakter des Rohwassers beizubehalten. Der sensorische Charakter des Rohwassers ist von der Mineralstoffkonzentration abhängig, und die genaue Einstellung bzw. Wiederherstellung der relevanten Mineralstoffkonzentrationen auf das Niveau des Rohwassers ist in den üblichen Verfahren schwierig und ungenau.

Im Stand der Technik sind darüber hinaus weitere Ansätze bekannt, Silizium in höheren Konzentrationen im Trinkwasser anzureichern, um so dieses Element dem menschlichen Körper in ausreichenden Mengen zuzuführen: JP H08 84992 A, KR 2012 0115873 A, WO 2004/112515 A1 und US 2011/064824 A1. Die US 2014/0271995A1 zeigt z.B. ein Verfahren zum Herstellen von Trinkwasser, bei dem Rohwasser als Zusatzstoff SiO₂ zugegeben wird, um die gewünschte Menge an Silikat im Trinkwasser zu erzielen. Weiter offenbart die CN104098169B die Zugabe von amorphen Si-Kristallen als Partikel oder Pulver zu gereinigtem Wasser. Generell haben diese Ansätze den Nachteil, dass das Silizium in der Form von SiO₂ (d.h. Kieselsäure) eingesetzt wird. Kieselsäure weist aber eine relativ geringe Löslichkeit im sauren und neutralen pH-Bereich auf, so dass zumindest zum Teil aufwändige Prozessschritte wie z.B. Filterschritte durchgeführt werden müssen, um den gewünschten Silikatgehalt im Trinkwasser einzustellen und unerwünschte Partikel zu entfernen.

Weiter offenbaren die WO2011/009950 A1 und WO2011/010188 A1 Verfahren zum Anreichern von ortho-Kieselsäure ([Si(OH)₄]) in Trinkwasser, bei denen ein Umkehrosmose-Prozessschritt mit nachfolgender Elektrodialyse dazu benützt wird, um zunächst Silizium im Wasser anzureichern und danach unerwünschte Mineralstoffe zu entfernen. Diese Verfahren sind aber auch aus kommerzieller Sicht ungünstig, da sie nur das bei der Umkehrosmose anfallende Retentat (das mit Silizium angereichert ist) zur Trinkwasserherstellung verwenden, das erhaltene Permeat dagegen verworfen wird.

Die US 2005/0247626 A1 offenbart ein Verfahren sowie eine Vorrichtung zur Herstellung von kalkhaltigem Wasser aus deionisiertem Wasser. Die WO 2011/010188 A1 offenbart ein Verfahren zur Herstellung von mit Kieselsäure angereichertem Wasser. Die WO 2011/009950 A1 offenbart ein Verfahren zur Herstellung von mit Kieselsäure angereichertem Wasser. Die DE 10 2008 052 001 A1 offenbart ein Verfahren zur Wasserbehandlung.

Insgesamt haben die im Stand der Technik offenbarten Verfahren den Nachteil, dass sich nur unter hohem apparativem Aufwand Trinkwasser mit angereichertem Silikatgehalt in großtechnischen Mengen wirtschaftlich herstellen lässt. Somit besitzen die im Stand der Technik bekannten Verfahren und Vorrichtungen den Nachteil, dass sich aus Kostengesichtspunkten ungünstig sind. Weiter ist es schwierig, mit den bekannten Verfahren und Vorrichtungen die ursprüngliche Mineralstoffzusammensetzung im Rohwasser beizubehalten, d.h. es ist schwierig die Konzentration anderer Mineralstoffe, die im Rohwasser vorliegen, im resultierenden Trinkwasser gleich zu belassen. Aus diesen Grund bleibt der natürliche sensorische Charakter des Trinkwassers vielfach nicht erhalten.

Als alternative Siliziumquelle zu Kieselsäure existiert z.B. Wasserglas. Als Wasserglas werden wässrige Lösungen aus Natrium-, Kalium-, und/oder Lithiumsilikat bezeichnet, die eine hohe Löslichkeit in Wasser aufweisen. Insbesondere Wasserglas aus Natrium- oder Kaliumsilikaten ist kommerziell in großen Mengen erhältlich und beinhaltet gleichzeitig die trinkwasserrelevanten Elemente Natrium und Kalium, und könnte deswegen potentiell als Additiv für silikathaltiges Trinkwasser dienen. Allerdings wurde Wasserglas aus Natrium- oder Kaliumsilikaten bisher nicht zur kommerziellen Herstellung von Trinkwasser eingesetzt, da dies gleichzeitig mit einem hohen Anstieg der Natrium- und/oder Kaliumkonzentration im Trinkwasser verbunden wäre. Dies ist aus Gesundheitsgesichtspunkten unerwünscht und geht auch mit einer verschlechterten Sensorik einher, wobei insbesondere der natürliche sensorische Charakter des Trinkwassers nicht erhalten bleibt.

### Aufgabe der vorliegenden Erfindung

Somit ist die Aufgabe der vorliegenden Erfindung das Bereitstellen eines Verfahrens zum Anreichern von Silikat in Trinkwasser, wobei sich das Trinkwasser in großtechnischen Mengen kostengünstig herstellen lässt.

Weiter ist die Aufgabe das Bereitstellen einer Vorrichtung zum Herstellen von Trinkwasser, das mit Silikat angereichert ist, das sich in großtechnischen Mengen kostengünstig herstellen lässt.

### Kurze Beschreibung der Erfindung

Diese Aufgabe wird durch das Verfahren gemäß Anspruch 1 gelöst. Bevorzugte Ausführungsformen des Verfahrens sind in den Unteransprüchen 2 bis 8 definiert, die auch in Kombination untereinander umfasst sind. Weiter wird die Aufgabe durch die Vorrichtung gemäß Anspruch 9 gelöst. Bevorzugte Ausführungsformen der Vorrichtung sind in den Unteransprüchen 10 bis 15 definiert, die auch in Kombination untereinander umfasst sind.

### Figuren

Fig. 1 zeigt schematisch das Prinzip einer reversen Elektrodialyse mit einer Kation-, Anion- und Bipolarmembran.
Fig. 2 zeigt schematisch eine Ausführungsform einer reversen Elektrodialyse unter ausschließlicher Verwendung einer Bipolar- und/oder Kationmembran.
Fig. 3 zeigt schematisch ein Ausführungsbeispiel einer erfindungsgemäßen Vorrichtung zur Anreicherung von Silikat in Trinkwasser.

### Detaillierte Beschreibung der Erfindung

Das Verfahren zur Anreicherung von Silikat in Trinkwasser umfasst die folgenden Schritte: Auftrennen von Rohwasser über einen Umkehrosmoseprozess in ein Permeat, umfassend demineralisiertes Rohwasser, und ein Retentat, umfassend mit Mineralstoffen angereichertes Rohwasser; Mischen des Permeats und einer Wasserglaslösung, umfassend Natrium- und/oder Kaliumsilikat; Unterziehen von zumindest einem Teil der Mischung einem lonenaustauschprozess zum Verringern der Konzentration von Natrium- und/oder Kaliumionen; und Zuführen zumindest eines Teils des Retentats zu der Mischung mit verringerter Konzentration von Natrium- und/oder Kaliumionen, um ein mit Silikat angereichertes Trinkwasser zu erhalten.

Erfindungsgemäß erfolgt das Auftrennen des Rohwassers über Umkehrosmose (englisch: "osmosis reversal", OR) in ein Permeat und ein Retentat. Umkehrosmoseprozesse sind im Stand der Technik bekannt, so dass dafür geeignete Vorrichtungen und Verfahrensparameter dem Durchschnittsfachmann bekannt sind. Das Permeat umfasst demineralisiertes Rohwasser, das vom Retentat (d.h. dem Anteil des Wassers, der nach der Umkehrosmose eine hohe Konzentration an Mineralstoffen aufweist) abgetrennt wird.

Der Begriff "demineralisiertes Rohwasser" im Sinne der vorliegenden Erfindung ist reines Wasser, das einen Gesamtfeststoffanteil von bevorzugt 5 ppm oder weniger besitzt. Der Gesamtfeststoffanteil entspricht dem Trockenrückstand. Typischerweise wird die Umkehrosose so durchgeführt, dass das Permeat ca. 40 bis 99 Vol.-% und das Retentat ca. 1 bis 60 Vol.-%, bevorzugt 45 bis 95 Vol.-% Permeat und 5 bis 55 Vol.-% Retentat, mehr bevorzugt ca. 60 bis 90 Vol.% Permeat und 10 bis 40 Vol.% Retentat des Gesamtvolumens des eingesetzten Rohwassers ausmacht. Insbesondere bevorzugt wird das Volumenverhältnis auf 75 Vol.-% Permeat und 25 Vol.-% Retentat eingestellt. Rohwasser gemäß der vorliegenden Erfindung ist z.B. Grundwasser, Oberflächenwasser oder Flusswasser. Generell können alle Arten von Rohwasser eingesetzt werden, die für Menschen oder Tiere nicht gesundheitsschädlich sind.

Der Begriff "Wasserglaslösung" gemäß der vorliegenden Erfindung definiert eine wässrige Lösung, umfassend Natrium- und/oder Kaliumsilikat, und ist bevorzugt eine gesättigte Lösung. In Ausführungsformen ist die Konzentration an Natrium- und/oder Kaliumsilikat in der Wasserglaslösung 1 mol/l oder größer, bevorzugt 2 mol/l oder größer, mehr bevorzugt 3 mol/l oder größer, insbesondere bevorzugt größer 3,2 mol/l. Die Herstellung solcher Wasserglaslösungen ist im Stand der Technik bekannt und wird hier nicht weiter beschrieben.

Durch das Mischen des Permeats und der Wasserglaslösung, umfassend Natrium- und/oder Kaliumsilikat, erfolgt das Herstellen einer Mischung, deren Silikatkonzentration je nach Mischungsverhältnis gezielt angereichert werden kann, so dass ein Trinkwasser mit angereichertem Silikatgehalt resultiert. Bevorzugte Mischungsverhältnisse von Wasserglaslösung zu Wasser (Permeat) liegen massenbezogen im Bereich zwischen 1:10 bis 1:10000, bevorzugt 1:100 bis 1: 5000, mehr bevorzugt 1:184 bis 1:3061.

Allerdings weist die Mischung des Permeats, d.h. des demineralisierten Rohwassers, und der Wasserglaslösung eine sehr hohe Konzentration an Natrium- und/oder Kaliumionen auf, so dass die Mischung, zumindest bei relevanten Mischungsverhältnissen in Bezug auf den Silikatgehalt, ohne eine nachfolgende Behandlung nur bedingt als Trinkwasser geeignet ist, da dies mit einer unerwünschten Sensorik einhergehen würde. Aus diesem Grund wird erfindungsgemäß zumindest ein Teil der Mischung einen lonenaustauschprozess unterzogen, um die Konzentration von Natrium- und/oder Kaliumionen zu verringern, d.h. um die gewünschte Konzentration an Natrium- und/oder Kaliumionen im resultierenden Trinkwasser einzustellen.

Erfindungsgemäß erfolgt der lonenaustauschprozess durch elektrochemische Prozesse unter Verwendung von Membranen, d.h. über eine reverse Elektrodialyse und/oder eine Elektrodeionisation.

Der Begriff "lonenaustauschprozess" gemäß der vorliegenden Erfindung umfasst die oben genannten Prozesse, die geeignet sind, Kationen, und insbesondere Natrium- und/oder Kaliumionen, aus der Mischung des demineralisierten Rohwassers und der Wasserglaslösung zu entfernen und durch H⁺ zu ersetzen. Dabei wird die Konzentration an Anionen, wie z.B. Silikat, durch den lonenaustauschprozess nicht verändert.

Der pH-Wert der Wasserglaslösung bzw. der Mischung des demineralisiertem Rohwassers und der Wasserglaslösung liegt dabei bevorzugt im basischen Bereich, wie z.B. pH 9 oder höher, da dies eine höhere Löslichkeit des Natrium- und/oder Kaliumsilikat bedingt. So ist die Löslichkeit bei pH 9 oder höher 250 mg/l SiO₂ oder mehr. Im Vergleich dazu ist die Löslichkeit bei neutralem oder saurem pH geringer, z.B. ca. 150 bis kleiner als 250 mg/l SiO₂. Allerdings sinkt beim lonenaustauschprozess der pH wieder, so dass der Prozess bevorzugt so durchgeführt wird, dass das resultierende Trinkwasser einen neutralen pH-Wert aufweist. Diese pH Wertverschiebung beim lonenaustauschprozess ist auch der Grund, wieso es nicht möglich ist eine gesättigte Wasserglaslösung einem lonenaustauschprozess zu unterziehen, da sonst beim lonenaustauschprozess Silikat ausfallen würde. Beim erfindungsgemäßen Verfahren ist es somit notwendig, das Mischen des demineralisierten Rohwassers mit der Wasserglaslösung vor dem lonenaustauschprozess durchzuführen, d.h. es ist nicht möglich, eine konzentrierte Wasserglaslösung von Natrium- und/oder Kaliumionen zu befreien und das mineralisierte Rohwasser erst nach dem lonenaustauschprozess hinzuzufügen.

Mit diesem Verfahren ist es möglich, Trinkwasser, das einen angereicherten Silikatgehalt aufweist, in großtechnischen Mengen wirtschaftlich herzustellen. Weiter bleibt der natürliche sensorische Charakter des Trinkwassers erhalten (bei einer vollständigen Wiedervermischung mit dem Retentat, da die Zusammensetzung des Rohwassers in Bezug auf dessen Mineralstoffgehalt, bis auf den angereicherten Silikatgehalt, nicht geändert wird).

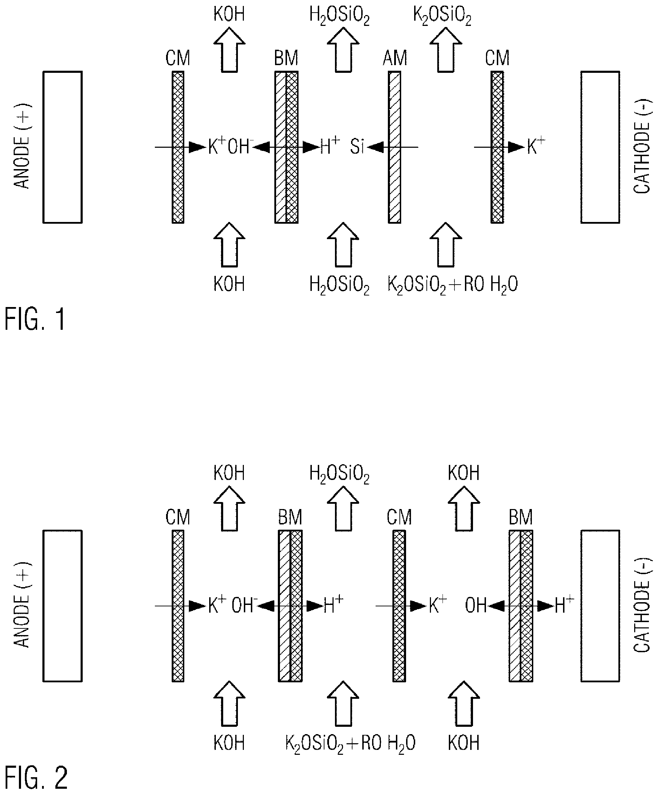

Eine reverse Elektrodialyse wird dabei bevorzugt verwendet, da damit eine besonders effektive Entfernung von Natrium-und/oder Kaliumionen möglich ist. Die reverse Elektrodialyse (englisch: "electrodialysis reversal"; EDR) verwendet elektrische Spannung um Ionen nach ihrer Ladung zu separieren. Das Prinzip der reversen Elektrodialyse mit einer Kation-, Anion- und Bipolarmembran ist in Fig. 1 gezeigt. Die wässrige Lösung aus demineralisiertem Rohwasser (RO H₂O) und einer Wasserglaslösung, umfassend Kaliumsilikat (K₂OSiO₂), wird dabei über eine Abfolge von Kationmembranen (CM), Anionmembranen (AM) und Bipolarmembranen (BM) durch Anlegen von elektrischer Spannung in Anionen und Kationen aufgeteilt. Dabei ist die Kationmembran so beschaffen, dass ausschließlich Kationen permeieren können, während ausschließlich Anionen durch die Anionmembran permeieren. Bipolaremembranen spalten Wassermoleküle in Wasserstoffionen und Hydroxidionen auf, wobei verhindert wird, dass andere Ionen auf die jeweils andere Seite der Membran wechseln. Nach Durchführen des Verfahrens ist ein Auftrennen in eine Säure und eine Base, d.h. Kieselsäure und Kaliumhydroxid, erfolgt. Für die Durchführung der reversen Elektrodialyse können kommerziell erhältliche Anlagen verwendet werden. Geeignete EDR Anlagen werden z.B. von den Herstellern MEGA a.s. / Czechia oder FUJiFilm Manufacturing Europe B.V. / Netherlands vertrieben. Die Durchführung der reversen Elektrodialyse erfolgt gemäß Herstellerangaben.

In einer bevorzugten Ausführungsform wird die reverse Elektrodialyse unter ausschließlicher Verwendung einer Bipolar- und/oder Kationmembran durchgeführt. Eine entsprechende Ausführungsform ist in Fig. 2 gezeigt, bei der lediglich Kationmembranen und Bipolarmembranen eingesetzt werden. Diese Ausführungsform ist vorteilhaft, da damit der lonentransfer schneller und effizienter durchgeführt werden kann. Weiter wurde überraschenderweise beobachtet, dass unvorteilhafte Gerüche, die insbesondere bei einer Ausführungsform gemäß Fig.1 unter Durchführung bei basischen pH-Werten aufgetreten sind, in der Ausführungsform gemäß Fig.2 nicht detektiert wurden. Ein weiterer Vorteil dieser Ausführungsform ist, dass kein signifikanter Verlust von Silikat in der Membran stattfindet. Außerdem ist es mit einer solche Membrananordnung in einem EDR-System möglich zu verhindern, dass Sulfationen, die als Elektrolyt eingesetzt werden können, um die Leitfähigkeit zu erhöhen, ins Produkt wandern.

In einer anderen Ausführungsform ist der lonenaustauschprozess eine Elektrodeionisation (EDI). Elektrodeionisationsprozesse sind im Stand der Technik bekannt. Bevorzugt wird die EDI mit SAC-Harz im H⁺-Zyklus durchgeführt. Die Regeneration erfolgt bei der EDI kontinuierlich durch die angelegte Spannung und die damit verbundene Spaltung von Wasser an den Bipolarmembranen. Geeignete EDI Anlagen werden z.B. von den Herstellern SnowPure Water Technologies / USA oder EVOQUA Water Technologies LLC vertrieben. Die Durchführung der Elektrodeionisation erfolgt gemäß Herstellerangaben.

Bevorzugt ist die Wasserglaslösung eine Kaliumsilikat-Wasserglaslösung (CAS No. 1312-76-1). Kaliumsilikat-Wasserglaslösungen sind zwar geringfügig teurer als Natriumsilikat-Wasserglaslösungen. Allerdings haben Natriumsilikate aufgrund ihres spezifischen Herstellungsprozesses den Nachteil, dass unerwünschte Bestandteile, wie z.B. Amine, vorhanden sein können, die die Qualität und Sensorik des Wassers negativ beeinflussen.

Bevorzugt wird das Mischen des Permeats und der Wasserglaslösung so durchgeführt, dass die Konzentration des Silikats in der Mischung, unter Berücksichtigung einer noch folgenden Rückvermischung mit zumindest einem Teil des Retentats, der Silikat Endkonzentration im gewünschten Trinkwasser entspricht. Dieses liegt bevorzugt im Bereich von 50 bis 500 mg/l, mehr bevorzugt von 100 bis 300 mg/l, insbesondere bevorzugt von 130 bis 250 mg/l. Eine solche Verfahrensausgestaltung ist kommerziell bevorzugt, da dadurch weitere Konzentrationsanpassungen entfallen können. Dadurch wird die erwünschte erhöhte Silikat-Endkonzentration im Trinkwasser einfach sichergestellt.

Bevorzugt erfolgt der lonenaustauschprozess derart, dass die resultierende Konzentration von Natrium- und/oder Kaliumionen im Bereich von 0-10 mg/l, bevorzugt im Bereich von 0-5 mg/l, insbesondere bevorzugt im Bereich von 0-1 mg/l, weiter bevorzugt im Bereich von 0-0,1 mg/l, liegt. In Ausführungsformen ist die Konzentration von Natrium- und/oder Kaliumionen 0,001 mg/l oder weniger. Eine solch niedrige Konzentration ist aus Gesundheitsgesichtspunkten bevorzugt und resultiert in einer natürlichen Sensorik des resultierenden Trinkwassers.

In einer bevorzugten Ausführungsform des Verfahrens wird dem Rohwasser vor dem Umkehrosmoseprozess ein lebensmittelechter Härtestabilisator zugegeben. Die Zugabe von Härtestabilisatoren zum Rohwasser hat den Vorteil, dass das Ausfallen und Ablagern von Metallsalzen, wie z.B. Calziumcarbonat oder Eisensalzen, unterdrückt wird. Dadurch werden zum einen unerwünschte Ablagerungen in Prozessbauteilen verhindert. Zum anderen kann dadurch eine gegebenenfalls auftretende, unerwünschte Trübung des resultierenden Trinkwassers unterdrückt werden, die von ausgefallenen Metallsalzpartikeln herrührt. Falls ein Härtestabilisator zugesetzt wird, muss dieser erfindungsgemäß ein lebensmittelechter Härtestabilisator sein. "Lebensmittelecht" im Sinne der vorliegenden Erfindung bedeutet, dass der Härtestabilisator aus gesundheitlicher Sicht unbedenklich dem Trinkwasser zugesetzt werden kann. Die Verwendung von nicht-lebensmittelechten Härtestabilisatoren ist nicht möglich, da dieser ansonsten über das Retentat ins hergestellte Trinkwasser gelangen würde.

Als lebensmittelechte Härtestabilisatoren können erfindungsgemäß alle Materialen verwendet werden, die diese Bedingungen erfüllen, d.h. die lebensmittelecht sind und als Härtestabilisatoren in Wasser fungieren. Geeignete, kommerziell erhältliche, lebensmittelechte Härtestabilisatoren sind z.B. Verbindungen auf Phosphatbasis. Diese können in Ausführungsformen in einer Konzentration von bis zu 7 mg/l zugegeben werden. Erfindungsgemäß ist es aber bevorzugt, dass der lebensmittelechte Härtestabilisator CO₂ ist, da so eine leichte und kostengünstige Zudosierung möglich ist. Zudem kann CO₂ leicht und kostengünstig aus dem Trinkwasser entfernt werden, falls die Herstellung eines stillen Trinkwassers erfolgen soll.

In einer Ausführungsform umfasst das Verfahren einen Schritt des Entfernens von CO₂ nach dem Umkehrosmoseprozess. Dabei wird das Entfernen von CO₂ bevorzugt nach dem Schritt des Zuführens des Retentats zu der Mischung mit verringerter Konzentration von Natrium- und/oder Kaliumionen durchgeführt. Durch eine solche Verfahrensausgestaltung lässt sich schnell und effektiv CO₂ aus dem Trinkwasser entfernen.

In einer bevorzugten Ausführungsform ist das Trinkwasser mit hohem Silikatgehalt ein stilles Trinkwasser. Für das erfindungsgemäße Verfahren bedeutet das in Bezug auf den Einsatz von CO₂ als Härtestabilisator, dass das Verfahren weiter einen Schritt des Entfernens von CO₂ über Vakuumentgasung, Druckentgasung oder Membranentgasung umfasst. Auch eine Kombination dieser Entgasungsverfahren ist erfindungsgemäß möglich. Bei der Vakuumentgasung erfolgt das Entgasen durch Anlegen eines Vakuums. Bei der Druckentgasung wird dem Wasser ein zweites Gas (wie z.B. Stickstoff oder Luft) zugesetzt, das das erste Gas (d.h. CO₂) verdrängt. Insbesondere erfolgt die Druckentgasung durch Verwenden eines CO₂-Rieslers, mit dem die Oberfläche vergrößert werden kann, was mit einer erhöhten Prozessgeschwindigkeit einhergeht. Weiter können die Vakuumentgasung und die Druckentgasung bei erhöhter Temperatur erfolgen, um die Prozessgeschwindigkeit zu erhöhen. Entsprechende Verfahrensausgestaltungen sind hinlänglich bekannt und werden hier nicht weiter erläutert. Falls das Entfernen von CO₂ mit Vakuumentgasung durchgeführt wird, kann die Vakuumentgasung mit oder ohne Verwenden von Strippgas erfolgen. Als Strippgase werden bevorzugt O₂, N₂ oder andere Inertgase eingesetzt. Vorzugsweise erfolgt dabei die Einstellung des pH-Werts im Trinkwasser. Dabei kann bei der CO₂-Entfernung der pH-Wert als Regelgröße zur Steuerung verwendet werden.

In einer Ausführungsform umfasst das Verfahren weiter einen Schritt des Entkeimens des Rohwassers und/oder einen Schritt des Entkeimens des mit Silikat angereicherten Trinkwassers. Das Entkeimen wird dabei bevorzugt mit einem Membrantrennprozess durchgeführt. Allerdings sind auch andere Verfahren möglich, wie UV-Bestrahlung etc. solange diese in der Lage sind die notwendige Entkeimung sicherzustellen, so dass alle Erfordernisse an ein Trinkwasser erfüllt werden. Somit wird gewährleistet, dass das resultierende Trinkwasser in jedem Fall (d.h. auch bei Verwenden von verschmutztem Rohwasser) die erforderliche Wasserqualität aufweist. Bevorzugt erfolgt die Durchführung des Membrantrennprozesses über Ultrafiltration (UF), womit eine besonders effektive Entkeimung möglich ist. Die Ultrafiltration ist ein Filtrationsverfahren, bei dem Partikel mit spezifischen Partikelgrößen gefiltert werden können, wobei die Ultrafiltration in Ausführungsformen Partikel mit minimalen Durchmessern im Bereich von 0,05 µm bis 0,005 µm filtert. Insbesondere ist bevorzugt, dass die Ultrafiltration Partikel mit Durchmessern von 0,02 µm oder größer filtert. Entsprechende Membrantrennprozesses sind im Stand der Technik bekannt und werden hier nicht weiter erläutert. Eine Nanofiltration, ist zumindest in Ausführungsformen nicht möglich, da mit einer Nanofiltration bereits Partikel mit sehr kleinen Durchmessern gefiltert werden, so dass in Ausführungsformen bereits Ionen vom Mineralstoffen mit relativ großen Moleküldurchmessern (wie z.B. Ca²⁺, Mg²⁺ oder SO4²⁻) abgetrennt werden.

Zusätzlich können weitere Reinigungsprozesse zur Reinigung bzw. Aufbereitung von Rohwasser durchgeführt werden. Beispiele sind u.a. Absorptionsprozesse über Aktivkohlefilter zur Abtrennung von z.B. organischen Verbindungen, Biochemische Verfahren wie z.B. Denitrifikation von mit Nitrat belasteten Gewässern, Desinfektion wie Behandlung mit Chlor, Ozon oder UV-Strahlung, sowie Fällungs-, Flockungs-, Flotations-, Oxidations-, Sedimentations- oder Siebungsprozesse.

Ein erfindungsgemäßer Schritt des offenbarten Verfahrens ist die Wiedervermischung oder Zuführung zumindest eines Teils des Retentats zur Mischung aus Permeats mit der Wasserglaslösung (nach der oben beschriebenen Behandlung mindestens eines Teils der Mischung durch lonenaustauschprozesse). In Ausführungsformen umfasst das Verfahren die Zuführung von mindestens 50 Vol.%, bevorzugt mindestens 70 Vol.%, mehr bevorzugt mindestens 90 Vol.% des Retentats. Bevorzugt ist eine vollständige Wiedervermischung, da so das gesamte Volumen des eingesetzten Rohwassers zur Herstellung des Trinkwassers eingesetzt wird. Optional ist vor der Wiedervermischung auch eine weitere Behandlung des Retentats durch hier beschriebene Verfahren möglich, wie Entkeimung, sowie weitere Verfahren, wie Verdünnung mit Trinkwasser etc. Erfindungsgemäß bevorzugt ist es allerdings, wenn das eingesetzte Rohwasser eine derartige Qualität (als insbesondere Mineraliengehalt) aufweist, dass das komplette Retentat wieder zugeführt werden kann. Dies erlaubt eine äußerst effektive und kommerziell günstige Verfahrensführung.

Weiter können in Ausführungsformen, wenn benötigt, dem Trinkwasser geeignete weitere Mineralstoffe in geeigneten Konzentrationen zugegeben werden. Dies geschieht bevorzugt über das Retentat. Weiter kann die Zugabe auch nach der Zuführung des Retentats erfolgen. Verfahren und Prozesse zur Zugabe von Mineralstoffen sind allgemein bekannt und werden hier nicht näher erläutert.

Die vorliegende Erfindung betrifft weiter eine Vorrichtung zur Anreicherung von Silikat im Trinkwasser. Diese Vorrichtung umfasst eine Umkehrosmoseeinheit zum Auftrennen von Rohwasser in ein Permeat, umfassend demineralisiertes Rohwasser, und ein Retentat, umfassend mit Mineralstoffen angereichertes Rohwasser; eine Mischeinheit zum Mischen des Permeats und einer Wasserglaslösung, umfassend Natrium- und/oder Kaliumsilikat; einen Ionenaustauscher zum Unterziehen von zumindest einem Teil der Mischung einem lonenaustauschprozess zum Verringern der Konzentration von Natrium- und/oder Kaliumionen; und eine Zuführeinheit zum Zuführen mindestens eines Teils des Retentats zum behandelten Permeat. So kann einfach und in einem kontinuierlichen Verfahren ein mit Silikat angereichertes Trinkwasser erhalten werden.

Diese Vorrichtung ist dazu geeignet, ein Verfahren zur Anreicherung von Silikat im Trinkwasser wie oben beschrieben durchzuführen. Mit dieser Vorrichtung ist es möglich, ein Trinkwasser zu erhalten, das mit Silikat angereichert ist, das sich in großtechnischen Mengen kostengünstig herstellen lässt, und bei dem der natürliche sensorische Charakter erhalten bleibt, wenn die Konzentration anderer Mineralstoffe im Vergleich zum Rohwasser nicht verändert wird (also bei der vollständigen Zuführung des Retentats ohne weitere Behandlung). Weitere Vorteile und Ausführungsformen der Vorrichtung sind in Bezug auf das Verfahren beschrieben und gelten auch für die Vorrichtung.

Erfindungsgemäß ist dabei der Ionenaustauscher ein Bauteil zum Durchführen einer reversen Elektrodialyse und/oder einer Elektrodeionisation. Bevorzugt ist eine reverse Elektrodialyse, umfassend ausschließlich Bipolar- und/oder Kationmembranen.

In einer weiteren Ausführungsform umfasst die Vorrichtung ein Bauteil zum Zugeben eines lebensmittelechten Härtestabilisators. Das Bauteil zur Eindosierung eines lebensmittelechten Härtestabilisators ist bevorzugt so mit der erfindungsgemäßen Vorrichtung verbunden, dass der Härtestabilisator dem Rohwasser vor der Einleitung in die Umkehrosmoseeinheit zugeführt wird. Bevorzugt ist dieses Bauteil zur Eindosierung von CO₂ als Härtestabilisator geeignet.

Optional kann erfindungsgemäß ein Bauteil zum Entfernen des lebensmittelechten Härtestabilisators vorhanden sein. Dies kann eine geeignete Vorrichtung zur chemischen und/oder physikalischen Entfernung des Härtestabilisatoren sein. Insbesondere beim Einsatz von CO₂ als Härtestabilisatoren und falls die Vorrichtung zur Herstellung von stillem Trinkwasser dienen soll, ist ein derartiges Bauteil sinnvoll. Ist der lebensmittelechte Härtestabilisator CO₂, so ist es bevorzugt, dass das Bauteil zum Entfernen von CO₂ eine Vakuumentgasungseinheit, eine Druckentgasungseinheit, oder eine Membranentgasungseinheit ist, wobei die Vakuumentgasungseinheit bevorzugt eine Dosiereinheit von Strippgas umfasst. Das Bauteil zur Entfernung des Härtestabilisatoren ist bevorzugt so vorgesehen, dass die Entfernung nach der Rückführung des Retentats erfolgen kann.

In Ausführungsformen umfasst die Vorrichtung eine Entkeimungseinheit zum Entkeimen des Rohwassers und/oder eine Entkeimungseinheit zum Entkeimen des mit Silikat angereicherten Trinkwassers. Dabei umfasst die Entkeimungseinheit eine Trennmembran, bevorzugt eine Ultrafiltrations(UF)-Membran.

Weiter umfasst die Erfindung eine Abfüllanlage, insbesondere eine Getränkeabfüllanlage, zum Abfüllen des mit Silikat angereicherten Trinkwassers, wobei die Abfüllanlage die oben beschriebene Vorrichtung umfasst. Die Abfüllanlage umfasst eine um eine vertikale

Drehachse rundlaufendes Karussell mit einer Vielzahl von baugleichen Abfüllstationen zum Abfüllen des mit Silikat angereicherten Trinkwassers, die entlang des Umfangs des Karussells angeordnet sind. Insbesondere kann mit der Abfüllanlage das mit Silikat angereicherte Trinkwasser effektiv und kostengünstig in Flaschen abgefüllt werden.

Das Verfahren und die Vorrichtung sind insbesondere dazu geeignet, ein Trinkwasser mit angereichertem Silikatgehalt herzustellen, das zur Behandlung von neurodegenerativen Krankheiten wie z.B. Alzheimer verwendet wird.

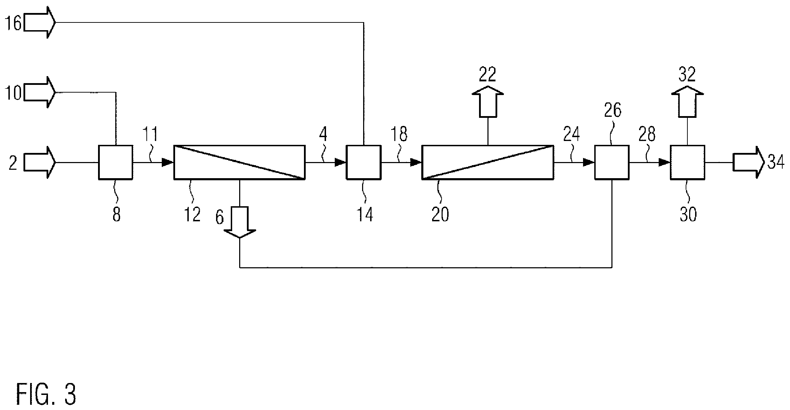

Die Erfindung und ihre Vorteile werden anhand des in Fig. 3 dargestellten Ausführungsbeispiels weiter erklärt.

Fig. 3 zeigt schematisch ein Ausführungsbeispiel einer erfindungsgemäßen Vorrichtung zur Herstellung von Trinkwasser mit angereichertem Silikatgehalt.

Die Vorrichtung umfasst ein Bauteil (8) zum Zugeben CO₂ (10) als lebensmittelechten Härtestabilisator zu Rohwasser (2). Weiter umfasst die Vorrichtung eine Umkehrosmoseeinheit (12), in der das mit CO₂ angereicherte Rohwasser (11) in ein Permeat (4), umfassend demineralisiertes Rohwasser, und ein Retentat (6), umfassend mit Mineralstoffen angereichertes Rohwasser aufgetrennt wird. Zusätzlich beinhaltet die Vorrichtung eine Mischeinheit (14) zum Herstellen einer Mischung (18) des Permeats (4) und einer Wasserglaslösung (16), umfassend Natrium- und/oder Kaliumsilikat. Weiter umfasst die Vorrichtung einen Ionenaustauscher (20), in dem die Mischung (18) über einen lonenaustauschprozess in eine Mischung (24) mit verringerter Konzentration von Natrium- und/oder Kaliumionen und Natrium- und/oder Kaliumionen (22) umgewandelt werden kann. Auch beinhaltet die Vorrichtung eine Zuführeinheit (26) zum Zuführen des Retentats (6) zur Mischung (24) mit verringerter Konzentration von Natrium- und/oder Kaliumionen, so dass mit Silikat angereichertes Trinkwasser (28) hergestellt werden kann. Schließlich umfasst die Vorrichtung ein Bauteil (30) zum Entfernen von CO₂ (32), nämlich eine Vakuumentgasungseinheit, umfassend eine Dosiereinheit von Strippgas (nicht gezeigt). Die Vorrichtung umfasst weiter optional eine Entkeimungseinheit zum Entkeimen des Rohwassers und/oder eine Entkeimungseinheit zum Entkeimen des mit Silikat angereicherten Trinkwassers (nicht gezeigt).

Mit der Vorrichtung gemäß Fig. 3 kann das erfindungsgemäße Verfahren wie folgt durchgeführt werden:
In der Vorrichtung nach Fig. 3 wird Rohwasser (2) im Bauteil (8) mit CO₂ (10) versetzt und das mit CO₂ versetzte Rohwasser (11) in der Umkehrosmoseeinheit (12) in Permeat (4) und Retentat (6) aufgetrennt. Anschließend wird in der Mischeinheit (14) zum Retentat (4) eine Wasserglaslösung (16), umfassend Natrium- und/oder Kaliumsilikat, zugegeben. Die Mischung (18) aus Permeat und Wasserglaslösung wird in den Ionenaustauscher (20) überführt. Dort wird über eine reverse Elektrodialyse die Konzentration von Natrium- und/oder Kaliumionen verringert, die als Kalium- und/oder Natriumionen (22) aus dem Ionenaustauscher (20) ausgeführt werden. Die Mischung (24) mit verringerter Konzentration an Kalium- und/oder Natriumionen wird in die Zuführeinheit (26) überführt, in der zur Mischung (24) das Retentat (6) zugeführt wird, wodurch ein mit Silikat angereichertes Trinkwasser (28) hergestellt wird. Anschließend wird im Bauteil (30) über eine Vakuumentgasungseinheit mit N₂ Strippgas CO₂ (32) entfernt, wodurch mit Wasser angereichertes stilles Trinkwasser (34) hergestellt wird.

## Patentansprüche

1. Verfahren zur Anreicherung von Silikat in Trinkwasser, umfassend die Schritte:
Auftrennen von Rohwasser über einen Umkehrosmoseprozess in ein Permeat, umfassend demineralisiertes Rohwasser, und ein Retentat, umfassend mit Mineralstoffen angereichertes Rohwasser,
Mischen des Permeats und einer Wasserglaslösung, umfassend Natrium- und/oder Kaliumsilikat,
Unterziehen von zumindest einem Teil der Mischung einem lonenaustauschprozess zum Verringern der Konzentration von Natrium- und/oder Kaliumionen, wobei der lonenaustauschprozess eine reverse Elektrodialyse und/oder eine Elektrodeionisation ist, und
Zuführen mindestens eines Teils des Retentats zu der Mischung mit verringerter Konzentration von Natrium- und/oder Kaliumionen.

2. Verfahren nach Anspruch 1, wobei der lonenaustauschprozess über reverse Elektrodialyse und/oder Elektrodeionisation unter ausschließlicher Verwendung einer Bipolar- und/oder Kationen-Membran durchgeführt wird.

3. Verfahren nach Anspruch 1 oder 2, wobei das Mischen des Permeats und der Wasserglaslösung so durchgeführt wird, dass die Konzentration des Silikats in der Mischung, unter Berücksichtigung der Rückführung mindestens eines Teils des Retentats, der gewünschten Silikat Endkonzentration im Trinkwasser entspricht, die bevorzugt im Bereich von 50 bis 500 mg/l, mehr bevorzugt von 100 bis 300 mg/l, insbesondere bevorzugt von 130 bis 250 mg/l, liegt.

4. Verfahren nach einem der Ansprüche 1 bis 3, wobei dem Rohwasser vor dem Umkehrosmoseprozess ein lebensmittelechter Härtestabilisator zugegeben wird.

5. Verfahren nach Anspruch 4, wobei der lebensmittelechte Härtestabilisator CO₂ ist.

6. Verfahren nach Anspruch 5, weiter umfassend einen Schritt des Entfernens von CO₂ nach dem Umkehrosmoseprozess, bevorzugt nach dem Schritt des Zuführens des Retentats zu der Mischung mit verringerter Konzentration von Natrium- und/oder Kaliumionen.

7. Verfahren nach Anspruch 6, wobei der Schritt des Entfernens von CO₂ über Vakuumentgasung, Druckentgasung oder Membranentgasung durchgeführt wird, wobei das Entfernen mit Vakuumentgasung mit oder ohne Verwenden von Strippgas durchgeführt wird.

8. Verfahren nach einem der Ansprüche 1 bis 7, weiter umfassend einen Schritt des Entkeimens des Rohwassers und/oder einen Schritt des Entkeimens des mit Silikat angereicherten Trinkwassers mit einem Membrantrennprozess, bevorzugt über Ultrafiltration (UF).

9. Vorrichtung zur Herstellung eines mit Silikat angereicherten Trinkwassers gemäß einem Verfahren nach irgendeinem der Ansprüche 1 bis 8, umfassend:
eine Umkehrosmoseeinheit zum Auftrennen von Rohwasser in ein Permeat, umfassend demineralisiertes Rohwasser, und ein Retentat, umfassend mit Mineralstoffen angereichertes Rohwasser,
eine Mischeinheit zum Mischen des Permeats und einer Wasserglaslösung, umfassend Natrium- und/oder Kaliumsilikat,
einen Ionenaustauscher zum Unterziehen von zumindest einem Teil der Mischung einem lonenaustauschprozess zum Verringern der Konzentration von Natrium- und/oder Kaliumionen, wobei der Ionenaustauscher ein Bauteil zum Durchführen einer reversen Elektrodialyse und/oder einer Elektrodeionisation ist, und
eine Zuführeinheit zum Zuführen mindestens eines Teils des Retentats zur Mischung mit verringerter Konzentration von Natrium- und/oder Kaliumionen.

10. Vorrichtung nach Anspruch 9, wobei das Bauteil für den Ionenaustauscher zum Durchführen der reversen Elektrodialyse und/oder der Elektrodeionisation eine Bipolar- und/oder eine Kationen-Membran umfasst.

11. Vorrichtung nach Anspruch 9 oder 10, weiter umfassend ein Bauteil zum Zugeben eines lebensmittelechten Härtestabilisators und optional ein Bauteil zum Entfernen des lebensmittelechten Härtestabilisators.

12. Vorrichtung nach Anspruch 11, wobei das Bauteil zur Zugabe des Härtestabilisatoren eine CO₂ Eindosierungseinheit ist.

13. Vorrichtung nach Anspruch 11 und/oder 12, wobei das Bauteil zum Entfernen des Härtestabilisatoren ein Bauteil zur Entfernung von CO₂ ist, bevorzugt eine Vakuumentgasungseinheit, eine Druckentgasungseinheit, oder eine Membranentgasungseinheit ist, und wobei die Vakuumentgasungseinheit bevorzugt eine Dosiereinheit von Strippgas umfasst.

14. Vorrichtung nach einem der Ansprüche 9 bis 13, weiter umfassend eine Entkeimungseinheit zum Entkeimen des Rohwassers und/oder eine Entkeimungseinheit zum Entkeimen des mit Silikat angereicherten Trinkwassers, wobei die Entkeimungseinheit eine Trennmembran, bevorzugt eine Ultrafiltration(UF)-Membran.

15. Abfüllanlage, insbesondere eine Getränkeabfüllanlage, zum Abfüllen von mit Silikat angereichertem Trinkwasser, umfassend eine Vorrichtung gemäß einem der Ansprüche 9 bis 14, wobei die Abfüllanlage ein um eine vertikale Drehachse rundlaufendes Karussell mit einer Vielzahl von baugleichen Abfüllstationen zum Abfüllen des mit Silikat angereicherten Wassers, die entlang des Umfangs des Karussells angeordnet sind, umfasst.

## Claims

1. A method for enriching silicate in drinking water comprising the steps:
separating raw water via a reverse osmosis process into a permeate comprising demineralized raw water and a retentate comprising mineral enriched raw water,
mixing the permeate and a water glass solution comprising sodium and/or potassium silicate,
subjecting at least a portion of the mixture to an ion exchange process to reduce the concentration of sodium and/or potassium ions, wherein the ion exchange process is reverse electrodialysis and/or electrodeionization, and
supplying at least part of the retentate to the mixture with reduced concentration of sodium and/or potassium ions.

2. The method according to claim 1, wherein the ion exchange process is conducted via reverse electrodialysis and/or electrodeionization using only a bipolar and/or cation membrane.

3. The method according to claim 1 or 2, wherein the mixing of the permeate and the water glass solution is carried out in such a way that the concentration of the silicate in the mixture, taking into account the recycling of at least part of the retentate, corresponds to the desired final silicate concentration in the drinking water, preferably in the range from 50 to 500 mg/l, more preferably from 100 to 300 mg/l, in particular preferably from 130 to 250 mg/l.

4. The method according to any of Claims 1 to 3, wherein a food-safe hardness stabilizer is added to the raw water prior to the reverse osmosis process.

5. The method according to claim 4, wherein the food-safe hardness stabilizer is CO₂

6. The method according to claim 5, further comprising a step of removing CO₂ after the reverse osmosis process, preferably after the step of supplying the retentate to the mixture with reduced concentration of sodium and/or potassium ions.

7. The method according to claim 6, wherein the step of removing CO₂ is carried out by vacuum degassing, pressure degassing or membrane degassing, wherein the removal is carried out by vacuum degassing with or without using stripping gas.

8. The method according to any one of Claims 1 to 7, further comprising a step of sterilizing the raw water and/or a step of sterilizing the silicate-enriched drinking water with a membrane separation process, preferably via ultrafiltration (UF).

9. Device for producing a silicate-enriched drinking water according to m method in accordance with any of claims 1 to 8, comprising:
a reverse osmosis unit for separating raw water into a permeate comprising demineralized raw water and a retentate comprising mineral enriched raw water,
a mixing unit for mixing the permeate and a water glass solution comprising sodium and/or potassium silicate,
an ion exchanger for subjecting at least a portion of the mixture to an ion exchange process to reduce the concentration of sodium and/or potassium ions, wherein the ion exchanger is a component for performing reverse electrodialysis and/or electrodeionization, and
a feed unit for feeding at least a portion of the retentate to the mixture with reduced concentration of sodium and/or potassium ions.

10. The device according to claim 9, wherein the component for the ion exchanger for performing the reverse electrodialysis and/or the electrodeionization comprises a bipolar and/or a cation membrane.

11. The device according to claim 9 or 10 further comprising a component for adding a food grade hardness stabilizer and optionally a component for removing the food grade hardness stabilizer.

12. The device according to claim 11, wherein the component for adding the hardness stabilizer is a CO₂ dosing unit.

13. The device according to claim 11 and/or 12, wherein the hardness stabilizer removing member is a CO₂ removing member, preferably a vacuum degassing unit, a pressure degassing unit, or a membrane degassing unit, and wherein the vacuum degassing unit preferably comprises a metering unit of stripping gas.

14. The device according to any of claims 9 to 13, further comprising a sterilization unit for sterilizing raw water and/or a sterilization unit for sterilizing silicate-enriched drinking water, wherein the sterilization unit comprises a separation membrane, preferably an ultrafiltration (UF) membrane.

15. Filling plant, in particular a beverage filling plant, for filling silicate-enriched drinking water, comprising a device according to one of claims 9 to 14, wherein the filling plant comprises a carousel rotating about a vertical axis of rotation with a plurality of identical filling stations for filling the silicate-enriched water, which are arranged along the circumference of the carousel.

## Revendications

1. Procédé d'enrichissement de l'eau potable en silicate, comprenant les étapes consistant à :
séparer, grâce à un procédé d'osmose inverse, l'eau brute en un perméat comprenant de l'eau brute déminéralisée et en un rétentat comprenant de l'eau brute enrichie en substances minérales,
mélanger le perméat et une solution de verre soluble comprenant du silicate de sodium et/ou de potassium,
soumettre au moins une partie du mélange à un procédé d'échange d'ions afin de réduire la concentration en ions sodium et/ou potassium, dans lequel le procédé d'échange d'ions est une électrodialyse inverse et/ou une électrodéionisation, et
alimenter au moins une partie du rétentat vers le mélange avec une concentration réduite en ions sodium et/ou potassium.

2. Procédé selon la revendication 1, dans lequel le procédé d'échange d'ions est mis en œuvre grâce à une électrodialyse inverse et/ou une électrodéionisation en utilisant exclusivement une membrane bipolaire et/ou cationique.

3. Procédé selon la revendication 1 ou 2, dans lequel le mélange du perméat et de la solution de verre soluble est mis en œuvre de sorte que la concentration en silicate dans le mélange, en tenant compte du recyclage d'au moins une partie du rétentat, correspond à la concentration finale en silicate souhaitée dans l'eau potable, qui se situe de manière préférée dans la plage comprise entre 50 et 500 mg/l, de manière plus préférée comprise entre 100 et 300 mg/l, de manière particulièrement préférée comprise entre 130 et 250 mg/l.

4. Procédé selon l'une quelconque des revendications 1 à 3, dans lequel un stabilisateur de dureté de qualité alimentaire est ajouté à l'eau brute avant le procédé d'osmose inverse.

5. Procédé selon la revendication 4, dans lequel le stabilisateur de dureté de qualité alimentaire est du CO₂.

6. Procédé selon la revendication 5, comprenant en outre une étape consistant à éliminer le CO₂ après le procédé d'osmose inverse, de manière préférée après l'étape consistant à alimenter le rétentat vers le mélange avec une concentration réduite en ions sodium et/ou potassium.

7. Procédé selon la revendication 6, dans lequel l'étape d'élimination du CO₂ est mise en œuvre grâce à un dégazage sous vide, un dégazage sous pression ou un dégazage à membrane, dans lequel l'élimination est mise en œuvre avec un dégazage sous vide avec ou sans utilisation de gaz de stripage.

8. Procédé selon l'une quelconque des revendications 1 à 7, comprenant en outre une étape de stérilisation de l'eau brute et/ou une étape de stérilisation de l'eau potable enrichie en silicate, grâce à un procédé de séparation à membrane, de manière préférée par ultrafiltration (UF).

9. Dispositif permettant de produire une eau potable enrichie en silicate selon un procédé selon l'une quelconque des revendications 1 à 8, comprenant :
une unité d'osmose inverse permettant de séparer l'eau brute en un perméat comprenant de l'eau brute déminéralisée et en un rétentat comprenant de l'eau brute enrichie en substances minérales,
une unité de mélange permettant de mélanger le perméat et une solution de verre soluble comprenant du silicate de sodium et/ou de potassium,
un échangeur d'ions permettant de soumettre au moins une partie du mélange à un procédé d'échange d'ions afin de réduire la concentration en ions sodium et/ou potassium, dans lequel l'échangeur d'ions est un élément permettant de mettre en œuvre une électrodialyse inverse et/ou une électrodéionisation, et
une unité d'alimentation permettant d'alimenter au moins une partie du rétentat vers le mélange avec une concentration réduite en ions sodium et/ou potassium.

10. Dispositif selon la revendication 9, dans lequel l'élément faisant office d'échangeur d'ions comprend une membrane bipolaire et/ou une membrane cationique afin de mettre en œuvre l'électrodialyse inverse et/ou l'électrodéionisation.

11. Dispositif selon la revendication 9 ou 10, comprenant en outre un élément permettant d'ajouter un stabilisateur de dureté de qualité alimentaire et éventuellement un élément permettant d'éliminer le stabilisateur de dureté de qualité alimentaire.

12. Dispositif selon la revendication 11, dans lequel l'élément permettant d'ajouter le stabilisateur de dureté est une unité de dosage de CO₂.

13. Dispositif selon la revendication 11 et/ou 12, dans lequel l'élément permettant d'éliminer le stabilisateur de dureté est un élément permettant d'éliminer le CO₂, de manière préférée une unité de dégazage sous vide, une unité de dégazage sous pression ou une unité de dégazage à membrane, et dans lequel l'unité de dégazage sous vide comprend de manière préférée une unité de dosage de gaz de stripage.

14. Dispositif selon l'une quelconque des revendications 9 à 13, comprenant en outre une unité de stérilisation permettant de stériliser l'eau brute et/ou une unité de stérilisation permettant de stériliser l'eau potable enrichie en silicate, dans lequel l'unité de stérilisation comprend une membrane de séparation, de manière préférée une membrane d'ultrafiltration (UF).

15. Installation d'embouteillage, en particulier installation d'embouteillage de boissons, permettant d'embouteiller de l'eau potable enrichie en silicate, comprenant un dispositif selon l'une quelconque des revendications 9 à 14, dans laquelle l'installation d'embouteillage comprend un carrousel tournant autour d'un axe de rotation vertical et présentant une pluralité de stations d'embouteillage de structure identique permettant d'embouteiller de l'eau enrichie en silicate et agencées le long de la circonférence du carrousel.
